# FASCICULE DE BREVET EUROPEEN

(11) **EP 3 927 945 B1**
(45) Date de publication et mention de la délivrance du brevet: **30.07.2025**
(21) Numéro de dépôt: 20704883.6
(22) Date de dépôt: 17.02.2020
(51) Int. Cl.: F01D 5/14, F01D 9/04, F02K 3/06

(54) **ROUE DE STATOR D'UNE TURBOMACHINE COMPRENANT DES AUBES PRÉSENTANT DES CORDES DIFFÉRENTES**
STATORRING EINER TURBOMASCHINE WELCHE STATORSCHAUFELN MIT UNTERSCHIDLICHER SEHNENLÄNGE AUFWEIST
TURBOMACHINE STATOR RING COMPRISING STATOR VANES WITH DIFFERENT CHORD LENGHT

(30) Priorité: 19.02.2019 FR 1901638
(43) Date de publication de la demande: 29.12.2021
(73) Titulaire: SAFRAN AIRCRAFT ENGINES, 75015 Paris (FR)
(72) Inventeur: SOULAT, Laurent, 77550 MOISSY-CRAMAYEL (FR); LEBEAULT, Eva, Julie, 77550 MOISSY-CRAMAYEL (FR)
(74) Mandataire: Argyma
(86) Numéro de dépôt international: PCT/EP2020/054017
(87) Numéro de publication internationale: WO 2020/169499

(56) Documents cités:
- EP-A1- 3 121 383
- EP-A1- 3 369 893
- FR-A1- 2 681 644
- FR-A1- 3 032 495
- US-A1- 2011 255 964

## Description

### DOMAINE TECHNIQUE DE L'INVENTION

La présente invention concerne le domaine des turbomachines utilisées pour la propulsion d'un aéronef et concerne plus particulièrement une roue de stator d'une turbomachine.

### ETAT DE LA TECHNIQUE

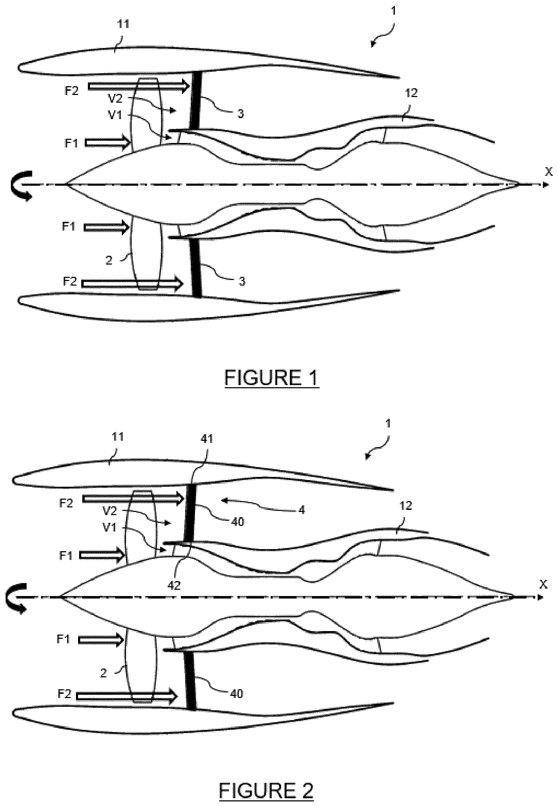

De manière connue, en référence à la figure 1, une turbomachine d'aéronef 1 s'étend longitudinalement selon un axe X et permet de déplacer l'aéronef à partir d'un flux d'air entrant dans la turbomachine 1 et circulant d'amont en aval. Par la suite, les termes « amont » et « aval » sont définis par rapport à l'axe longitudinal X orienté d'amont en aval. De même, les termes « intérieur » et « extérieur » sont définis selon la direction radiale par rapport à l'axe X.

La turbomachine 1 comprend un compresseur, une chambre de combustion et une soufflante amont 2, montée rotative autour de l'axe X et permettant d'aspirer un flux d'air dans la turbomachine 1. Comme représenté à la figure 1, la turbomachine 1 comporte un carter extérieur 11 dans lequel est monté la soufflante 2 et un carter intermédiaire 12, délimitant une veine primaire V1, intérieurement au carter intermédiaire 12, et une veine secondaire V2 entre le carter intermédiaire 12 et le carter extérieur 11. Lors du fonctionnement de la turbomachine 1, la soufflante 2 permet de générer un flux d'air d'amont en aval qui est décomposé en un premier flux d'air F1 circulant dans la veine primaire V1 et permettant d'alimenter le compresseur et un deuxième flux d'air F2 circulant dans la veine secondaire V2 de manière à être éjecté en aval de la turbomachine 1.

De manière connue, afin de redresser le deuxième flux d'air F2 qui a été vrillé par la rotation de la soufflante 2, la turbomachine 1 comprend au moins une roue de stator comprenant une pluralité d'aubes de stator 3, également désignées « redresseurs », montées radialement et espacées de manière régulière dans la veine secondaire V2 de la turbomachine 1 entre le carter intermédiaire 12 et le carter extérieur 11. Ces aubes de stator 3 sont connues de l'homme du métier sous leur acronyme anglais OGV pour « Outlet Guide Vane ». Une telle roue de stator est par exemple connue par la demande de brevet FR3004749. FR2681644A1, US2011/255964A1 et FR3032495A1 divulguent aussi une roue de stator.

Une fonction principale d'une roue de stator est de modifier la direction du deuxième flux d'air F2 afin de modifier l'énergie cinétique de manière à ce qu'elle soit exploitable pour la poussée de la turbomachine 1. La roue de stator permet ainsi de réduire les pertes aérodynamiques, assurer un bon rendement de la turbomachine 1 et garantir une robustesse à la prise d'incidence du flux d'air afin d'assurer la stabilité de fonctionnement de la turbomachine 1. De manière connue, les aubes de stator 3 possèdent une géométrie précise et prédéfinie permettant d'assurer au mieux les fonctions précitées. Les aubes de stator 3 sont dimensionnées de manière à présenter une section et une orientation prédéfinies pour optimiser la déviation du deuxième flux d'air F2.

Cependant, une roue de stator peut également remplir un rôle structural, thermique ou aérodynamique. En effet, cette dernière peut par exemple être amenée à améliorer la reprise et la transmission des efforts dans la turbomachine ou encore l'échange de chaleur entre le flux d'air primaire chaud F1 circulant à l'intérieur du carter intermédiaire 12 et un flux d'air secondaire froid F2 circulant à l'extérieur dudit carter intermédiaire 12.

Afin d'assurer ces fonctions complémentaires, il est nécessaire d'augmenter la section des aubes de stator 3 de manière à augmenter leur raideur mécanique et ainsi réduire les contraintes appliquées sur chacune. Il est également nécessaire d'augmenter la surface en contact avec le deuxième flux d'air F2 de manière à maximiser le flux thermique. Le profil d'une aube de stator 3 déterminé pour assurer les échanges thermiques diverge ainsi du profil permettant d'assurer des performances aérodynamiques optimales. De manière connue, une roue de stator comporte une pluralité d'aubes de stator 3 identiques dont le profil résulte d'un compromis entre les performances aérodynamiques et thermiques. Une telle solution n'est pas optimale car elle affecte les performances de la turbomachine.

Aussi, pour limiter ces inconvénients, l'invention a pour objectif de proposer une roue de stator, permettant d'assurer à la fois la fonction de redressement et une fonction aérodynamique, structural et/ou thermique, tout en évitant une pénalisation des performances de la turbomachine.

De manière incidente, on connait par la demande de brevet FR3004749, une roue de stator comportant des aubes de stator et des bras de stator épaissis qui comportent des servitudes. De tels bras de stator ne peuvent pas être confondus avec des aubes de stator et possèdent une épaisseur très importante.

On connaît par la demande de brevet FR2681644A1 un turboréacteur pour un avion supersonique comprenant un plan séparateur de manière à réduire les ondes acoustiques. L'épaisseur et la corde de certaines aubes de stator peuvent être modifiées. En particulier, la longueur d'une aube peut être doublée. Les documents US 2011/255964 A1 et FR3032495 A1 enseignent également de prévoir quelques aubes dont la longueur est au moins doublée.

### PRESENTATION DE L'INVENTION

A cette fin, l'invention concerne une roue de stator d'une turbomachine selon la revendication 1.

De manière préférée, la différence de cordes s'applique à toutes les aubes adjacentes, c'est-à-dire, sur toute la révolution de l'aubage statorique. La différence de cordes entre deux aubes voisines 2 à 2 est ainsi limitée de manière globale.

Une telle roue de stator permet avantageusement d'assurer à la fois un rôle de redressement du deuxième flux d'air dans la veine secondaire et un rôle structural, aérodynamique et/ou thermique, tout en limitant la pénalisation des performances de la turbomachine. L'intégration d'aubes de cordes différentes permet en effet à une unique aube ou à un nombre limité d'aubes de la roue de remplir un rôle secondaire de manière spécialisée. De plus, la différence réduite de cordes permet à s'assurer qu'aucune perturbation locale n'impacte l'écoulement du deuxième flux d'air dans la veine secondaire. Autrement dit, la roue selon l'invention permet d'adapter la corde d'un nombre limité d'aubes en fonction du rôle qu'elle remplit, sans nécessiter la modification de l'ensemble des aubes qui pourrait impacter le fonctionnement et les performances globales de la turbomachine.

Une telle roue de stator va à l'encontre des pratiques établies qui visait à équiper la roue de stator avec des aubes de cordes de valeurs identiques à une même distance radiale.

De préférence, au moins une aube possède une première corde minimale et au moins une aube possède une deuxième corde maximale. La roue de stator comporte au moins une aube intercalaire, montée entre lesdites aubes, ayant une troisième corde comprise entre ladite première corde et ladite deuxième corde. L'intégration d'une aube intercalaire présentant une corde intermédiaire permet d'assurer une transition régulière de la longueur des aubes, permettant avantageusement de limiter les perturbations locales de l'écoulement du deuxième flux d'air dans la veine secondaire. Ainsi, les performances du stator ne sont pas impactées par la géométrie de la roue et le flux d'air traversant la veine secondaire est optimal en sortie de la turbomachine, permettant de garantir un bon rendement de la turbomachine.

De préférence encore, la roue de stator comporte au moins deux aubes intercalaires, montée entre lesdites aubes, ayant des cordes différentes comprises entre ladite première corde et ladite deuxième corde. L'utilisation de plusieurs aubes intercalaires est avantageuse pour permettre de lisser les transitions entre des aubes ayant de fortes différences de cordes.

De manière préférée, les cordes sont croissantes entre ladite première corde et ladite deuxième corde de manière à permettre une transition progressive entre les différents profils d'aubes de manière à limiter les perturbations locales.

Selon un aspect, la différence de cordes entre deux aubes adjacentes est supérieure ou égale à 5%, de préférence, supérieure ou égale à 10%, de manière à permettre de spécialiser les aubes en fonction de leur rôle principal (aérodynamique, thermique, structural, etc.).

Selon un aspect, la différence d'épaisseur maximale, entre les deux aubes adjacentes ayant des cordes différentes, est inférieure ou égale à 5%.

Selon un autre aspect, l'épaisseur relative d'une aube correspondant au rapport de l'épaisseur maximale sur la corde, la différence d'épaisseur relative, entre les deux aubes adjacentes ayant des cordes différentes, est inférieure ou égale à 10%.

L'invention a également pour objet une turbomachine destinée à être montée dans un aéronef, la turbomachine s'étendant selon un axe, ladite turbomachine comprenant une veine primaire de circulation d'un premier flux d'air et une veine secondaire de circulation d'un deuxième flux d'air dans laquelle une roue de stator, telle que présentée précédemment, est montée selon l'axe.

L'invention vise également un aéronef comprenant une turbomachine telle que décrite précédemment.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une turbomachine selon l'art antérieur ;
La figure 2 est une représentation schématique en coupe longitudinale d'une turbomachine selon l'invention ;
La figure 3 est une vue en coupe selon un plan de révolution de deux aubes de stator ;
La figure 4 est une vue en coupe selon un plan de révolution des aubes de stator d'une première forme de réalisation d'une roue de stator selon l'invention et
La figure 5 est une vue en coupe selon un plan de révolution des aubes de stator d'une deuxième forme de réalisation d'une roue de stator selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention est décrite dans ce document en référence à une turbomachine montée dans un avion, cependant il va de soi qu'elle s'applique à tout type d'aéronef.

Une turbomachine selon l'invention est présentée à la figure 2. Par souci de clarté et de concision, des références identiques sont utilisées entre les figures 1 et 2 pour identifier des caractéristiques identiques ou analogues. A cet effet, en référence à la figure 2, la turbomachine d'aéronef 1 s'étend longitudinalement selon un axe X et permet de déplacer l'avion à partir d'un flux d'air entrant dans la turbomachine 1 et circulant d'amont en aval. Par la suite, les termes « amont » et « aval » sont définis par rapport à l'axe longitudinal X orienté d'amont en aval. De même, les termes « intérieur » et « extérieur » sont définis selon la direction radiale par rapport à l'axe longitudinal X.

De manière connue, la turbomachine 1 comprend un compresseur, une chambre de combustion et une soufflante amont 2, montée rotative autour de l'axe X et permettant d'aspirer un flux d'air. Comme cela est représenté à la figure 2, la turbomachine 1 comporte un carter extérieur 11 dans lequel est monté la soufflante 2 et un carter intermédiaire 12, délimitant une veine primaire V1, intérieurement au carter intermédiaire 12, et une veine secondaire V2 entre le carter intermédiaire 12 et le carter extérieur 11. Lors du fonctionnement de la turbomachine 1, la soufflante 2 permet de générer un flux d'air d'amont en aval qui est décomposé en un premier flux d'air F1 circulant dans la veine primaire V1 et permettant d'alimenter le compresseur et un deuxième flux d'air F2 circulant dans la veine secondaire V2 de manière à être éjecté en aval de la turbomachine 1.

En référence à la figure 2, afin de redresser le deuxième flux d'air F2 qui a été vrillé par la rotation de la soufflante 2, la turbomachine 1 comprend une roue de stator 4 comprenant une pluralité d'aubes de stator 40, également désignées « redresseurs », montées radialement et espacées de manière régulière dans la veine secondaire V2 de la turbomachine 1 entre le carter intermédiaire 12 et le carter extérieur 11. Ces aubes de stator 40 sont connues de l'homme du métier sous leur acronyme anglais OGV pour « Outlet Guide Vane ». Dans cet exemple, la roue de stator 4 comporte une virole extérieure 41, appartenant au carter extérieur 11, et une virole intérieure 42, appartenant au carter intermédiaire 12. Les aubes de stator 40 s'étendent radialement entre la virole extérieure 41 et la virole intérieure 42 comme illustré à la figure 2.

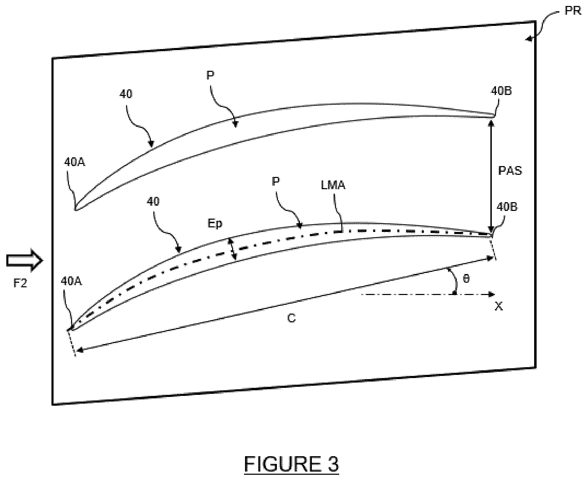

De manière connue, en référence à la figure 3, chaque aube de stator 40 comprend un bord d'attaque 40A, correspondant à l'extrémité située en amont et entrant en premier en contact avec le deuxième flux d'air F2, et un bord de fuite 40B, situé en aval. De manière connue, une aube 40 présente un profil qui est déterminé, en coupe, dans un plan de révolution PR autour de l'axe X de la turbomachine 1 représenté sur la figure 2. Un plan de révolution PR est déterminé pour une distance radiale prédéterminée.

Par aube de stator 40, on entend une aube de stator classique et non un organe de passage d'un arbre rotatif traversant la veine secondaire V2.

Dans le plan de révolution PR, en référence à la figure 3, chaque aube 40 présente un profil P allongé depuis le bord d'attaque 40A jusqu'au bord de fuite 40B. De manière connue, le profil P est défini suivant une pluralité de caractéristiques géométriques comme par exemple une longueur et une épaisseur. Dans cet exemple, le profil P d'une aube 40 est caractérisée par la distance entre le bord d'attaque 40A et le bord de fuite 40B, désignée corde C, et l'épaisseur maximale Ep. Dans cet exemple, l'épaisseur maximale Ep est définie orthogonalement à la direction de ligne moyenne de l'aube LMA. Comme illustré à la figure 3, celle ligne moyenne LMA (également connue de l'homme du métier sous sa désignation de ligne squelette ou de ligne de cambrure) relie le bord d'attaque 40A au bord de fuite et est équidistante de l'intrados et de l'extrados. De même, toujours en référence à la figure 3, une aube 40 est caractérisée par l'inclinaison de sa corde P par rapport à l'axe X de la turbomachine 1 (l'axe de révolution). Par la suite, pour un profil P, on définit un angle de calage θ entre l'axe X et la corde C. Enfin, une roue de stator 4 est caractérisée par son pas PAS correspondant à l'écartement entre les bords de fuite 40B de deux aubes de stator adjacentes 40 comme illustré à la figure 3.

Par la suite, on définit un premier profil P1 d'une aube 40 qui est déterminé pour remplir une fonction aérodynamique et redresser le flux d'air et on définit un deuxième profil P2 d'une aube 40 qui est déterminé pour remplir une fonction thermique et améliorer les échanges de chaleur entre le flux d'air primaire F1 circulant à l'intérieur du carter intermédiaire 12 et le deuxième flux d'air F2 circulant à l'extérieur du carter intermédiaire 12 de la turbomachine 1.

Comme présenté dans l'art antérieur, lorsqu'une roue de stator 4 est configurée pour remplir uniquement un rôle aérodynamique, celle-ci comprend uniquement des aubes ayant un premier profil P1 aérodynamique. De manière analogue, lorsqu'une roue de stator 4 est configurée pour remplir uniquement un rôle thermique, celle-ci comprend uniquement des aubes ayant un deuxième profil P2 thermique. Dans une telle roue de stator, le pas PAS est également identique entre deux aubes adjacentes 40.

Selon l'invention, afin que la roue de stator 4 remplisse un rôle thermique et aérodynamique, tout en limitant l'impact sur les performances de la turbomachine 1, la roue de stator 4 comprend au moins deux aubes 40 présentant une corde C différente. Le profil P d'une aube 40 est directement proportionnel à la corde C d'une telle aube 40. Aussi, une augmentation de la corde C entraine une augmentation de la section, permettant par exemple d'abaisser les contraintes mécaniques sur les aubes 40 de la roue. De même, une augmentation de la corde C entraine une augmentation du volume de l'aube 40, ce qui permet avantageusement d'augmenter la surface en contact avec le flux d'air entrant dans la turbomachine 1, maximisant ainsi les échanges thermiques.

Selon un aspect, le profil P des aubes 40 entre le bord d'attaque 40A et le bord de fuite 40B présente une épaisseur maximale Ep sensiblement identique pour les deux aubes 40 ayant des cordes différentes C. De manière préférée, l'épaisseur maximale Ep est définie à une position comprise entre 20% et 70% de la corde C en considérant que 0% correspond à la position du bord d'attaque 40A et que 100% correspond à la position du bord de fuite 40B. Par épaisseur maximale Ep sensiblement identique, on entend une variation de l'épaisseur maximale Ep qui est inférieure à 5%. Ainsi, on obtient une variation de corde à épaisseur maximale constante.

Selon un autre aspect, le profil P des aubes 40 entre le bord d'attaque 40A et le bord de fuite 40B présente une épaisseur relative sensiblement identique pour les deux aubes 40 ayant des cordes différentes C. L'épaisseur relative est définie comme le rapport de l'épaisseur maximale Ep sur la corde C. Par épaisseur relative sensiblement identique, on entend une variation de l'épaisseur relative qui est inférieure à 10%. Ainsi, on obtient une variation de corde à épaisseur relative constante. De manière préférée, le rapport de l'épaisseur relative d'une aube de corde allongée sur l'épaisseur relative d'une aube de corde normale est inférieur à 1,1. Un tel rapport permet de limiter les perturbations locales de l'écoulement entre deux aubes adjacentes de cordes différentes.

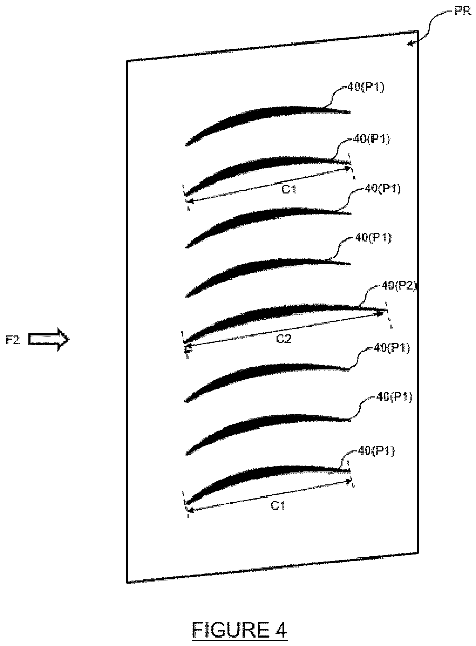

En référence à la figure 4, dans le plan de révolution PR, il est représenté 7 aubes 40 ayant un premier profil aérodynamique P1 de première corde C1 et une unique aube 40 ayant un deuxième profil thermique P2 de deuxième corde C2. Dans cet exemple, la deuxième corde C2 est plus longue que la première corde C1 de manière à maximiser les échanges thermiques. Contrairement à l'usage général qui imposait d'utiliser toujours des aubes 40 ayant une corde identique, la présente invention prend le contre-pied de l'art antérieur et propose de spécialiser certaines aubes 40 de manière à ce qu'elles mettent en oeuvre leur fonction de manière optimale.

De manière préférée, la différence de corde C1, C2 entre deux aubes 40 adjacentes est inférieure à 50%, de préférence encore, inférieure à 25%. Une telle caractéristique permet une variation des caractéristiques aérodynamiques/thermiques sensiblement continue, ce qui permet de ne pas affecter les performances de la turbomachine 1, en particulier, les performances locales de l'écoulement au voisinage de l'aube 40 ayant un deuxième profil thermique P2 de deuxième corde C2. De manière préférée, la différence de corde C1, C2 entre deux aubes 40 adjacentes est supérieure à 5%, de préférence encore, supérieure à 10% de manière à spécialiser les aubes 40.

En fonction du type de turbomachine, lorsque la première corde C1 du premier profil aérodynamique P1 est trop éloignée de la deuxième corde C2 du deuxième profil thermique P2, une solution est de prévoir des aubes intercalaires 40 ayant des profils intercalaires P31, P32.

Il a été présenté deux profils P1, P2 afin de permettre d'optimiser, d'une part, les performances aérodynamiques et, d'autre part, les performances thermiques. Il va de soi que d'autres profils spécialisés pourraient être prévus, notamment, pour optimiser les performances mécaniques et structurales.

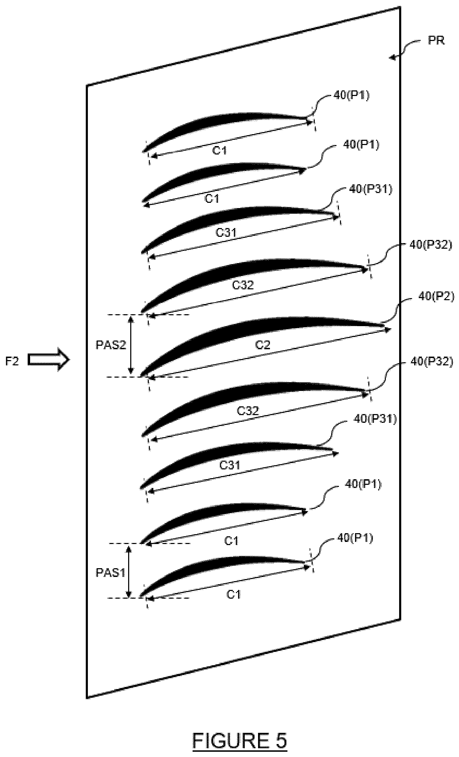

En référence à la figure 5, il est présenté des aubes intercalaires 40 ayant un premier profil intercalaire P31 de première corde intercalaire C31 et des aubes intercalaires 40 ayant un deuxième profil intercalaire P32 de deuxième corde intercalaire C32. Dans cette forme de réalisation, les cordes sont ordonnées de manière croissante selon cette séquence : C1 (plus petite corde), C31, C32, C2 (plus grande corde). La variation de corde est croissante entre la corde minimale C1 et la corde maximale C2. Dans cet exemple, la différence de corde entre deux aubes 40 adjacentes est inférieure à 50%, de préférence encore, inférieure à 25%.

En pratique, comme cela sera présenté par la suite, le nombre d'aubes intercalaires 40 entre une aube 40 de premier profil P1 et une aube 40 de deuxième profil P2 est défini en fonction de la différence entre la première corde C1 et la deuxième corde C2 et de la différence de corde C acceptable entre deux aubes adjacentes 40.

Comme illustré à la figure 5, les profils des aubes 40 sont disposés de manière consécutive selon la séquence suivante des cordes : C1, C1, C31, C32, C2, C32, C31, C1, C1. Une telle séquence est avantageuse car elle permet d'intégrer une aube 40 ayant un deuxième profil thermique P2 parmi un ensemble d'aubes 40 ayant un premier profil aérodynamique P1 qui est éloigné du deuxième profil thermique P2. L'utilisation d'aubes intercalaires 40 permet avantageusement d'éviter toute discontinuité dans le traitement thermique et aéronautique pour ne pas perturber le fonctionnement de la turbomachine 1. L'évolution de corde est avantageusement progressive.

La roue de stator 4 selon l'invention permet avantageusement d'assurer le redressement du flux d'air et de garantir le rôle mécanique demandé, tout en limitant la différence de cordes C entre deux aubes 40 adjacentes. Cela permet avantageusement d'assurer une transition régulière entre les profils des aubes 40 permettant de limiter les perturbations du deuxième flux d'air F2.

Dans cet exemple, il a été présenté deux types d'aubes intercalaire 40 mais il va de soi que leur nombre pourrait être différent.

De manière préférée, une roue de stator 4 selon l'invention comprend un nombre limité d'aubes 40 présentant une corde C différente. En effet, afin de limiter avantageusement les contraintes de fabrication et de montage, une telle roue de stator 4 comprend au maximum dix aubes 40 présentant des cordes C différentes.

Il a été présenté un premier profil aérodynamique P1 et un deuxième profil thermique P2 ayant des cordes différentes C1, C2. Il va de soi que le premier profil aérodynamique P1 et le deuxième profil thermique P2 pourraient comprendre une ou plusieurs autres caractéristiques différentes, en particulier, l'épaisseur maximale Ep, le pas PAS, l'angle de calage θ.

Selon un aspect, le premier profil aérodynamique P1 et le deuxième profil thermique P2 possèdent des cordes C1, C2 qui sont différentes mais une même épaisseur maximale Ep de manière à limiter la variation de section entre deux aubes 40 adjacentes, ce qui limite les perturbations locales de l'écoulement.

Selon un autre aspect, le premier profil aérodynamique P1 et le deuxième profil thermique P2 possèdent des cordes C1, C2 qui sont différentes et des épaisseurs maximales Ep différentes de manière à présenter des épaisseurs relatives constantes, c'est-à-dire un rapport entre l'épaisseur maximale EP et la corde C de l'aube 40, constante. Une telle alternative permet de garantir les caractéristiques mécaniques des profils P1, P2 (souplesse, fréquence propre, etc.).

Dans l'exemple précédent, la corde d'une aube 40 est définie en fonction des cordes C des aubes 40 adjacentes. Cependant, il va de soi que la corde C de chaque aube 40 pourrait tout aussi bien être fixée indépendamment de la corde C des aubes 40 adjacentes sur la roue de stator 4. Selon une telle alternative, la géométrie de chaque aube 40 est unique et permet une configuration optimale de la roue de stator 4 en fonction des besoins en termes de performance.

De manière préférée, le pas PAS entre deux aubes 40 est indépendant de la corde C, aussi si le pas PAS est identique mais que la corde C est différente entre deux aubes 40 adjacentes, alors le pas relatif (c'est-à-dire le rapport entre le pas PAS et la corde C varie en fonction de la corde C) est différent entre deux aubes 40. De manière alternative, le pas PAS entre deux aubes 40 présentant des cordes C différentes peut être différent (comme cela est représenté sur la figure 5 présentant un premier pas PAS1 et un deuxième pas PAS2).

De manière optionnelle, la variation de corde C entre deux aubes 40 peut être couplée à une variation de l'angle de calage θ des aubes 40 comme décrit précédemment. Une telle modification permet avantageusement de limiter la distorsion aérodynamique d'un flux d'air appliqué d'aval en amont de la turbomachine 1 sur la roue du stator 4, par exemple lorsque l'avion est en vol.

Il a été présenté en référence à la figure 5 une roue de stator 4 comprenant plusieurs aubes 40 de premier profil aérodynamique P1 et une unique aube 40 de deuxième profil thermique P2. Il va de soi que l'invention s'applique également à une roue de stator 4 comprenant plusieurs aubes 40 de deuxième profil thermique P2 et une unique aube 40 de premier profil aérodynamique P1. De même, il a été présenté deux profils P1, P2 afin de permettre d'optimiser, d'une part, les performances aérodynamiques et, d'autre part, les performances thermiques. Il va de soi que d'autres profils spécialisés pourraient être prévus, notamment, pour optimiser les performances mécaniques et structurales.

L'intégration d'une roue de stator 4 comprenant des aubes 40 présentant des cordes C différentes présente l'avantage de permettre à la roue d'assurer à la fois un rôle aérodynamique, structural, et thermique, tout en limitant la pénalisation des performances de la turbomachine 1, qui apparaitrait si l'intégralité des aubes 40 étaient identiques.

## Revendications

1. Roue de stator (4) d'une turbomachine (1) destinée à être montée dans un aéronef, la turbomachine (1) s'étendant selon un axe (X), ladite turbomachine (1) comprenant une veine primaire (V1) de circulation d'un premier flux d'air (F1) et une veine secondaire (V2) de circulation d'un deuxième flux d'air (F2) dans laquelle la roue de stator (4) est destinée à être montée selon l'axe (X), la roue de stator (4) comprenant une pluralité d'aubes (40) s'étendant radialement selon l'axe (X), chaque aube (40) comprenant un bord d'attaque (40A) et un bord de fuite (40B) définissant entre eux une corde (C1, C2, C31, C32) dans un plan de révolution (PR) défini par rapport à l'axe (X), la roue de stator (4) **étant caractérisée par le fait ce qu**'au moins deux aubes (40) possèdent des cordes (C1, C2, C31, C32) différentes à une même distance radiale, la différence de cordes (C1, C2, C31, C32) entre chaque aube (40) de la pluralité d'aubes (40) et l'aube (40) adjacente à ladite aube (40) étant inférieure ou égale à 25%.

2. Roue selon la revendication 1, dans laquelle, au moins une aube (40) possédant une première corde minimale (C1), au moins une aube (40) possédant une deuxième corde maximale (C2), la roue de stator (4) comporte au moins une aube intercalaire (40), montée entre lesdites aubes (40), ayant une troisième corde (C31, C32) comprise entre ladite première corde (C1) et ladite deuxième corde (C2).

3. Roue selon la revendication 2, dans laquelle la roue de stator (4) comporte au moins deux aubes intercalaires (40) ayant des cordes différentes (C31, C32) comprises entre ladite première corde (C1) et ladite deuxième corde (C2).

4. Roue selon l'une des revendications 2 à 3, dans laquelle les cordes (C1, C31, C32, C2) sont croissantes entre ladite première corde (C1) et ladite deuxième corde (C2).

5. Roue selon l'une des revendications 1 à 4, dans laquelle la différence de cordes (C1, C2, C31, C32) entre deux aubes (40) adjacentes est supérieure ou égale à 5%.

6. Roue selon l'une des revendications 1 à 5, dans laquelle la différence de cordes (C1, C2, C31, C32) entre deux aubes (40) adjacentes est supérieure ou égale à 10%.

7. Roue selon l'une des revendications 1 à 6, dans laquelle, la différence d'épaisseur maximale, entre les deux aubes adjacentes ayant des cordes différentes (C1, C2, C31, C32), est inférieure ou égale à 5%.

8. Roue selon l'une des revendications 1 à 7, dans laquelle, l'épaisseur relative d'une aube correspondant au rapport de l'épaisseur maximale Ep sur la corde (C1, C2, C31, C32), la différence d'épaisseur relative, entre les deux aubes adjacentes ayant des cordes différentes (C1, C2, C31, C32), est inférieure ou égale à 10%.

9. Roue selon l'une des revendications 1 à 8, dans laquelle, la différence de cordes (C1, C2, C31, C32) entre s'applique à toutes les aubes adjacentes, c'est-à-dire, sur toute la révolution de la roue de stator (4).

10. Turbomachine (1) destinée à être montée dans un aéronef, la turbomachine (1) s'étendant selon un axe (X), ladite turbomachine (1) comprenant une veine primaire (V1) de circulation d'un premier flux d'air (F1) et une veine secondaire (V2) de circulation d'un deuxième flux d'air (F2) dans laquelle une roue de stator (4) selon l'une des revendications 1 à 9, est montée selon l'axe (X).

11. Aéronef comprenant une turbomachine (1) selon la revendication 10.

## Patentansprüche

1. Statorrad (4) einer Turbomaschine (1) zum Einbau in ein Flugzeug, wobei sich die Turbomaschine (1) gemäß einer Achse (X) erstreckt, wobei die Turbomaschine (1) einen Primärkanal (V1) für die Zirkulation eines ersten Luftstroms (F1) und einen Sekundärkanal (V2) für die Zirkulation eines zweiten Luftstroms (F2) umfasst, in dem das Statorrad (4) bestimmt ist, gemäß der Achse (X) angebracht zu sein, wobei das Statorrad (4) eine Vielzahl von Schaufeln (40) umfasst, die sich radial gemäß der Achse (X) erstrecken, wobei jede Schaufel (40) eine Vorderkante (40A) und eine Hinterkante (40B) umfasst, die zwischen sich eine Sehne (C1, C2, C31, C32) in einer in Bezug auf die Achse (X) definierten Umlaufsebene (PR) definieren, wobei das Statorrad (4) **dadurch gekennzeichnet ist, dass** mindestens zwei Schaufeln (40) unterschiedliche Sehnen (C1, C2, C31, C32) im gleichen radialen Abstand aufweisen, wobei die Differenz der Sehnen (C1, C2, C31, C32) zwischen jeder Schaufel (40) der Vielzahl von Schaufeln (40) und der zu der Schaufel (40) benachbarten Schaufel (40) kleiner oder gleich 25 % ist.

2. Rad nach Anspruch 1, wobei, wenn mindestens eine Schaufel (40) eine erste minimale Sehne (P1) aufweist, mindestens eine Schaufel (40) eine zweite maximale Sehne (P2) aufweist, das Statorrad (4) mindestens eine zwischen den Schaufeln (40) angebrachte Zwischenschaufel (40) aufweist, die eine dritte Sehne (C31, C32) hat, die zwischen der ersten Sehne (C1) und der zweiten Sehne (C2) liegt.

3. Rad nach Anspruch 2, wobei das Statorrad (4) mindestens zwei Zwischenschaufeln (40) mit unterschiedlichen Sehnen (C31, C32) aufweist, die zwischen der ersten Sehne (C1) und der zweiten Sehne (C2) liegen.

4. Rad nach einem der Ansprüche 2 bis 3, wobei die Sehnen (C1, C31, C32, C2) zwischen der ersten Sehne (C1) und der zweiten Sehne (C2) zunehmen.

5. Rad nach einem der Ansprüche 1 bis 4, wobei die Differenz der Sehnen (C1, C2, C31, C32) zwischen zwei benachbarten Schaufeln (40) größer oder gleich 5 % ist.

6. Rad nach einem der Ansprüche 1 bis 5, wobei die Differenz der Sehnen (C1, C2, C31, C32) zwischen zwei benachbarten Schaufeln (40) größer oder gleich 10 % sind.

7. Rad nach einem der Ansprüche 1 bis 6, wobei die maximale Dickendifferenz zwischen den beiden benachbarten Schaufeln mit unterschiedlichen Sehnen (C1, C2, C31, C32) kleiner oder gleich 5 % ist.

8. Rad nach einem der Ansprüche 1 bis 7, wobei, wenn die relative Dicke einer Schaufel dem Verhältnis der maximalen Dicke Ep zur Sehne (C1, C2, C31, C32) entspricht, die relative Dickendifferenz zwischen zwei benachbarten Schaufeln mit unterschiedlichen Sehnen (C1, C2, C31, C32) kleiner oder gleich 10 % ist.

9. Rad nach einem der Ansprüche 1 bis 8, wobei die Differenz der Sehnen (C1, C2, C31, C32) dazwischen für allen benachbarten Schaufeln gilt, das heißt, über den gesamten Umlauf des Statorrades (4).

10. Turbomaschine (1) zum Einbau in ein Flugzeug, wobei sich die Turbomaschine (1) gemäß einer Achse (X) erstreckt, wobei die Turbomaschine einen Primärkanal (V1) für die Zirkulation eines ersten Luftstroms (F1) und einen Sekundärkanal (V2) für die Zirkulation eines zweiten Luftstroms (F2) umfasst, in dem ein Statorrad (4) nach einem der Ansprüche 1 bis 9 gemäß der Achse (X) angebracht ist.

11. Flugzeug, das eine Turbomaschine (1) nach Anspruch 10 umfasst.

## Claims

1. Stator wheel (4) of a turbomachine (1) configured to be mounted in an aircraft, the turbomachine (1) extending along an axis (X), the turbomachine (1) comprising a core flow stream (V1) for a first air flow and a bypass flow stream (V2) for a second air flow, wherein the stator wheel (4) is configured to be mounted along the axis (X), the stator wheel (4) comprising a plurality of vanes (40) extending radially from the axis (X), each vane (40) comprising a leading edge (40A) and a trailing edge (40B) that together define a chord (C1, C2, C31, C32) in a plane of revolution (PR) defined relative to the axis (X), the stator wheel (4) being **characterized by** the fact that at least two vanes (40) have different chords (C1, C2, C31, C32) at a same radial distance, the difference in chords (C1, C2, C31, C32) between each vanes (40) of the plurality of vanes (40) and the adjacent vane (40) to said vane (40) being less than or equal to 25%.

2. Wheel according to claim 1, wherein at least one vane (40) has a first minimum chord (C1) and at least one vane (40) has a second maximum chord (C2), the stator wheel (4) comprises at least one interleaved vane (40), mounted between said vanes (40), having a third chord (C31, C32) between said first chord (C1) and said second chord (C2)

3. Wheel according to claim 2, wherein the stator wheel (4) comprises at least two interleaved vanes (40) having different chords (C31, C32) between said first chord (C1) and said second chord (C2).

4. Wheel according to one of claims 2 to 3, wherein the chords (C1, C31, C32, C2) increase between said first chord (C1) and said second chord (C2).

5. Wheel according to one of claims 1 to 4, wherein the difference in chords (C1, C2, C31, C32) between two adjacent vanes (40) is greater than or equal to 5%.

6. Wheel according to one of claims 1 to 5, wherein the difference in chords (C1, C2, C31, C32) between two adjacent vanes (40) is greater than or equal to 10%.

7. Wheel according to one of claims 1 to 6, wherein the difference in the maximum thickness between two adjacent vanes with different chords (C1, C2, C31, C32) is less than or equal to 5%.

8. Wheel according to one of claims 1 to 7, wherein, the relative thickness of a vane corresponding to the ratio of the maximum thickness Ep and the chord (C1, C2, C31, C32), the difference in the relative thickness between two adjacent vanes with different chords (C1, C2, C31, C32) is less than or equal to 10%.

9. Wheel according to one of claims 1 to 8, wherein the difference in chords (C1, C2, C31, C32) applies to all adjacent vanes, in other words to the entire revolution of the stator wheel (4).

10. Turbomachine (1) configured to be mounted in an aircraft, the turbomachine (1) extending along an axis (X), said turbomachine (1) comprising a core flow stream (V1) for circulation of a first air flow (F1) and a bypass flow stream (V2) for circulation of a second air flow (F2) wherein a stator wheel (4) according to one of claims 1 to 9, is mounted along the axis (X).

11. Aircraft comprising a turbomachine (1) according to claim 10.
